# EUROPÄISCHE PATENTSCHRIFT

(11) **EP 0 357 952 B1**
(45) Veröffentlichungstag und Bekanntmachung des Hinweises auf die Patenterteilung: **02.03.1994**
(21) Anmeldenummer: 89114243.2
(22) Anmeldetag: 02.08.1989
(51) Int. Cl.: H01M 10/36

(54) **Nichtwässriges, wiederaufladbares galvanisches Lithiumelement mit anorganischer Elektrolytlösung**
Rechargeable non-aqueous lithium element with an inorganic electrolyte solution
Elément non aqueux rechargeable au lithium à solution électrolytique inorganique

(30) Priorität: 06.08.1988 DE 3826812
(43) Veröffentlichungstag der Anmeldung: 14.03.1990
(73) Patentinhaber: Heitbaum, Joachim, D-61352 Bad Homburg (DE); Hambitzer, Günther, D-76327 Pfinztal (DE)
(72) Erfinder: Heitbaum, Joachim, D-61352 Bad Homburg (DE); Hambitzer, Günther, D-76327 Pfinztal (DE)
(74) Vertreter: Pfeifer, Hans-Peter, Dr., Dr. H.-P. Pfeifer Dr. P. Jany, Patentanwälte

(56) Entgegenhaltungen:
- EP-A- 0 017 400
- DE-A- 3 122 080
- DE-A- 3 604 541
- FR-A- 2 548 461
- GB-A- 2 065 957
- GB-A- 2 083 942
- GB-A- 2 142 469
- US-A- 4 497 726

## Beschreibung

Die Erfindung betrifft ein nichtwässriges, wiederaufladbares galvanisches Element nach dem Oberbegriff des Anspruchs 1.

Aufgrund der geringen Atommasse und des negativen Normalpotentials des Lithiums können galvanische Lithiumelemente hohe Energiedichten erzielen. In Verbindung mit einer geeigneten positiven Elektrode sind damit hohe Ruheklemmspannungen von mehreren Volt realisierbar. Als Lösungsmittel für den Elektrolyten kommt dann nur eine organische oder anorganische Flüssigkeit mit entsprechend hoher Zersetzungsspannung in Frage. Auf dieser Basis wurden in den letzten Jahren verschiedene nichtwässrige Primärelemente entwickelt und auf den Markt gebracht, wobei hohe Energiedichten, insbesondere bei Verwendung von anorganischen Elektrolytlösungen erzielt wurden. Für ein ähnlich vorteilhaftes wiederaufladbares Sekundärelement ist ein System von Lithiumelektrode/anorganischem Elektrolyten/positiver Elektrode mit hoher Energiedichte, großer Zyklenzahl und ausreichender Leistungs- bzw. Stromdichte erforderlich.

Bekannt ist, daß für eine negative Elektrode aus Lithium, das Lösungsmittel SO₂ mit den chloridhaltigen Elektrolyten - wie zum Beispiel LiAlCl₄, LiGaCl₄, Li₂B₁₀Cl₁₀ - aus zwei Gründen hervorragend geeignet ist. Zum einen zeigt die Lithiumelektrode für die SO₂-haltige Elektrolytlösung die bei höchsten Stromdichten beste Zykeleffizienz. Zum anderen können die insbesondere bei höheren Ladestromdichten stärker wachsenden Lithiumdendriten mit der resultierenden Gefahr eines internen elektrischen Kurzschlusses durch eine mit dem Überladen verbundene Chlorentwicklung an der positiven Elektrode abgebaut werden.

In der GB-A-2 083 942 ist eine anorganische, nichtwässrige Li/SO₂-Zelle beschrieben, bei der vorzugsweise das SO₂ zugleich als Kathodendepolarisator (in Verbindung mit einer inerten Kohlenstoff-Elektrode) dient. Dort wird auch die Möglichkeit erwähnt, feste Kathodendepolarisatoren, wie beispielsweise Interkalationsverbindungen, zu verwenden, wobei Chromoxid, Titansulfid und Mangandioxid genannt werden. In der drei Jahre später angemeldeten US 4,508,798 weist die gleiche Anmelderin auf die Schwierigkeiten hin, die mit der Auffindung eines als aktive Masse für die Kathode geeigneten Feststoff-Materials verbunden sind.

Die Aufgabe der Erfindung besteht darin, ein wiederaufladbares Lithiumelement vorzuschlagen, das bei hoher Energiedichte, großer Zyklenzahl und ausreichender Leistungs- bzw. Stromdichte einwandfrei arbeitet.

Gelöst wird die Aufgabe durch die Erfindung mit den Merkmalen der Patentansprüche.

Anfang der achtziger Jahre wurde erstmals LiCoO₂ hergestellt und elektrochemisch in Propylenkarbonat untersucht (K. Mizushima et al., Mat. Res. Bull., Vol. 15, Seite 783-789, 1980, sowie EP-A-0 017 400). Die potentialbestimmende Reaktion ist die Einlagerung eines Lithiumanions in das Wirtsgitter unter gleichzeitiger Reduktion zum dreiwertigen Kobalt bzw. die Auslagerung mit Oxidation zum Kobalt(IV)oxid. Auch alle weiteren Untersuchungen beschäftigten sich mit dem Verhalten der Interkalationselektrode in organischen Lösungsmitteln.

Zur Erhöhung der Stromdichte und der mechanischen Stabilität der LiCoO₂-Interkalationselektrode ist der Zusatz eines oder mehrerer Stoffe aus der Gruppe von C, Ni, Al, Bindern wie Polytetrafluorethylen, Polyethylen und ähnlichen Kunststoffen zur positiven Elektrode vorteilhaft.

Ein besseres Tieftemperaturverhalten wird durch den Zusatz eines oder mehrerer anorganischer Substanzen aus der Gruppe SOCl₂, SO₂Cl₂, S₂Cl₂, SCl₂ zu dem Elektrolyt-Lösungsmittel erreicht.

Die mit der Erfindung erzielten Vorteile bestehen insbesondere darin, daß ein wiederaufladbares galvanisches Element mit hoher Spannung von im Mittel 4 Volt und hoher, in einer Batteriezelle realisierbarer Energiedichte von über 150 Wattstunden pro Kilogramm bei Zyklenzahlen von über 200 und Leistungsdichten von über 30 Watt pro Kilogramm herstellbar ist.

Eine in ein Laborelement eingefüllte Elektrolytlösung von 1 M LiAlCl₄ in bei Raumtemperatur nur unter Druck flüssigem SO₂, kann über ein Rückschlagventil kontrolliert durch Abdampfen von SO₂ auf Atmosphärendruck gebracht werden. Die elektrochemischen Eigenschaften des galvanischen Elements verändern sich nicht erkennbar. Es können Ableiternetze aus Nickel oder aus Aluminium verwendet werden.

### Beispiel

Die Erfindung wird anhand eines Ausführungsbeispiels näher erläutert.

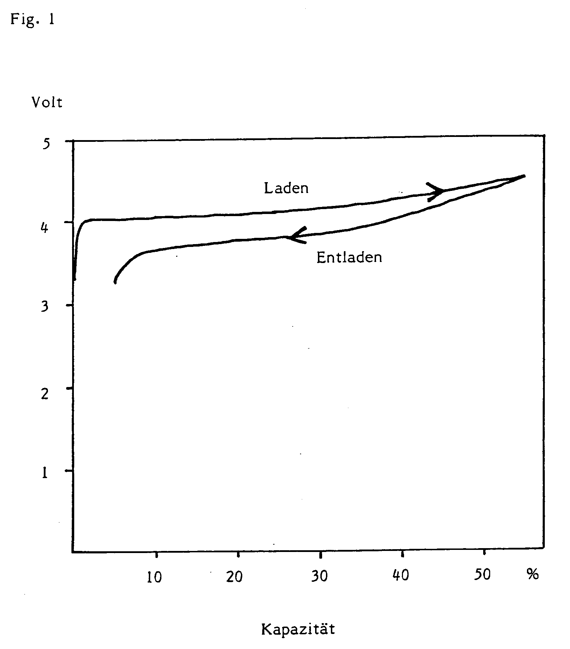

Die positive Masse wird aus einem 100 mg schweren Substanzgemisch, bestehend aus 80% LiCoO₂, 10% Graphit und 10% Polytetrafluorethylen (Gewichtsprozente), das auf ein Nickelnetz bei 550 K über 24 Stunden aufgepreßt wurde, hergestellt. Eine kreisrunde Scheibe mit einem Durchmesser von 9 mm ist sandwichartig von zwei Lithiumelektroden ähnlicher Abmessung eingefaßt. Die Elektroden sind untereinander durch Separatoren getrennt und befinden sich in einer gasdichten und druckfesten Glaszelle. Die Zelle wird mit 0,1 M LiAlCl₄ in SO₂ gefüllt und mit einem Strom von 20 mA zwischen 3,3V und 4,5 Volt zyklisch geladen und entladen. Es konnten über 200 Zyklen erreicht werden. Die erreichte Kapazität der positiven Masse, entsprechend der Menge der interkalierenden Lithiumionen in das Kobaltoxidwirtsgitter, lag mit fast 100 Umsätzen bei knapp 50% der theoretisch erreichbaren Kapazität. In Fig. 1 ist die Klemmspannung der Batterie während des 23. Lade/-Entladezyklus in Abhängigkeit von der Kapazität dargestellt.

## Patentansprüche

1. Nichtwässriges, wiederaufladbares galvanisches Element mit einer negativen Lithiumelektrode und einer positiven Interkalationselektrode in einer anorganischen Elektrolytlösung, die das Lösungsmittel SO₂ und ein Lithiumsalz mit Anionen aus den 3a-Element-Halogeniden enthält, **dadurch gekennzeichnet,** daß die positive Interkalationselektrode einen Stoff aus der Gruppe von LiCoO₂, CoO₂ und Mischungen daraus enthält.

2. Galvanisches Element nach Anspruch 1, **dadurch gekennzeichnet,** daß die positive Elektrode einen oder mehrere Stoffe aus der Gruppe von C, Ni, Al und Bindern wie Polytetrafluoroethylen und Polyethylen enthält.

3. Galvanisches Element nach einem der vorhergehenden Ansprüche, **dadurch gekennzeichnet,** daß die Zelle als zusätzliches anorganisches Lösungsmittel SOCl₂, SO₂Cl₂, S₂Cl₂ oder SCl₂ enthält.

4. Galvanisches Element nach einem der vorhergehenden Ansprüche, **dadurch gekennzeichnet,** daß das Anion des Lithiumsalzes AlCl₄⁻ ist.

## Claims

1. Non-aqueous, rechargeable galvanic cell with a negative lithium electrode and a positive intercalated electrode in an inorganic electrolyte solution, which contains the solvent SO₂ and a lithium salt with anions from the 3a element halides, **characterised in that** the positive intercalated electrode contains a material from the group of LiCoO₂, CoO₂ and mixtures thereof.

2. Galvanic cell according to claim 1, **characterised in that** the positive electrode contains one or more materials from the group of C, Ni, Al and binders such as Polytetrafluoroethylene and polyethylene.

3. Galvanic cell according to one of the preceding claims, **characterised in that** the cell contains SOCl₂, SO₂Cl₂, S₂Cl₂ or SCl₂ as an additional inorganic solvent.

4. Galvanic cell according to one of the preceding claims, **characterised in that** the anion is the lithium salt AlCl₄.

## Revendications

1. Elément galvanique non aqueux, rechargeable, avec une électrode de lithium négative et une électrode d'intercalation positive dans une solution électrolytique inorganique, qui comporte le solvant SO₂ et un sel de lithium avec des anions d'halogénures d'un élément 3a, caractérisé en ce que l'électrode d'intercalation positive comporte une substance du groupe de LiCoO₂, CoO₂ et des mélanges de ces substances.

2. Elément galvanique suivant la revendication 1, caractérisé en ce que l'électrode positive comporte une ou plusieurs substances du groupe de C, Ni, Al et des liants, tels que polytétrafluoroéthylène et polyéthylène.

3. Elément galvanique suivant l'une quelconque des revendications précédentes, caractérisé en ce que la cellule comporte, comme solvant minéral supplémentaire, SOCl₂, SO₂Cl₂, S₂Cl₂ ou SCl₂.

4. Elément galvanique suivant l'une quelconque des revendications précédentes, caractérisé en ce que l'anion du sel de lithium est AlCl₄⁻.
